(19) Europäisches Patentamt

European Patent Office

Office européen des brevets

(11) **EP 4 755 662 A1**

(12) **EUROPEAN PATENT APPLICATION**
published in accordance with Art. 153(4) EPC

(43) Date of publication:
**10.06.2026 Bulletin 2026/24**

(21) Application number: **24888305.0**

(22) Date of filing: **30.07.2024**

(51) International Patent Classification (IPC):
***B60C 23/04*** *(2006.01)*

(52) Cooperative Patent Classification (CPC):
**B60C 23/04**

(86) International application number:
**PCT/JP2024/027215**

(87) International publication number:
**WO 2025/100003 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.11.2023 JP 2023189670**

(71) Applicant: **BRIDGESTONE CORPORATION
Chuo-ku
Tokyo 104-8340 (JP)**

(72) Inventor: **SATO, Kodai
Tokyo 104-8340 (JP)**

(74) Representative: **Marks & Clerk LLP
15 Fetter Lane
London EC4A 1BW (GB)**

(54) **TIRE MONITORING DEVICE, TIRE MONITORING METHOD, AND TIRE MONITORING PROGRAM**

(57) A tire monitoring device includes: an acquisition unit that acquires internal pressure information indicating a transition of an internal pressure of a tire; a prediction unit that predicts a timing at which the internal pressure of the tire will reach a threshold, on the basis of a change pattern that is a pattern of internal pressure change indicated by the internal pressure information; and an output unit that outputs timing information indicating the predicted timing.

[Fig. 11A]

## Description

Technical Field

The disclosed technology relates to a tire monitoring device, a tire monitoring method, and a tire monitoring program.

Background Art

As a technology for monitoring the state of a tire provided on a vehicle, the following technology is known. For example, Japanese Patent Application Laid-Open (JP-A) No. 2014-076748 discloses a tire internal pressure alarm system including an information terminal device that determines a failure situation of puncture or natural decompression on the basis of change in internal pressure of each tire received from an internal pressure acquiring device that acquires the internal pressure of each tire of a vehicle, and displays a warning according to the failure situation.

SUMMARY OF INVENTION

Technical Problem

To maximize the performance of a tire, use at an appropriate internal pressure is required. In general, the internal pressure of a tire gradually decreases as the air inside the tire gradually escapes due to the pressure difference between the inside and the outside of the tire. There is a known tire pressure monitoring system (TPMS) that issues an alarm when the internal pressure of a tire falls below a threshold. In a case where an alarm is issued from the TPMS, measures such as air refilling can be taken, for example.

At present, in a case where an alarm is issued from the TPMS, measures are taken to perform maintenance on the target tire. However, if the target tire can be included in a maintenance plan at an earlier stage than the issuance of an alarm, it should be easier to secure resources such as equipment, parts, and personnel. Further, with the current measures being taken into consideration, in a case where an unexpected situation such as a rapid increase in the rate of decrease in internal pressure occurs, for example, emergency measures need to be taken, and the initial maintenance plan needs to be significantly modified in some cases. In this case, it may be difficult to secure resources such as equipment, parts, and personnel.

With the existing TPMS, it is not possible to estimate and report the cause of a decrease in the internal pressure of a tire. Because of this, for an abnormality that is not eliminated simply by air refilling, there might be a case where only the air refilling is performed, and the user notices the abnormality while repeating the air refilling in response to an alarm that is frequently issued. Until the abnormality is noticed, the tire is used at an internal pressure outside the appropriate range. As a result, the durability of the tire becomes poorer, and the customer value such as safety and long-term use is damaged. Also, a plurality of causes can be considered as causes of decrease in the internal pressure of a tire. Therefore, at the site of maintenance, it is necessary to perform a plurality of inspections to investigate the causes, and the work at the site becomes complicated.

Also, the time required for maintenance work greatly varies depending on each cause of decrease in internal pressure, and therefore, it is difficult to predict the maintenance work time in a situation where the cause is unknown. In a case where the work time is longer than planned, it is necessary to modify the initial maintenance plan. On the other hand, in a case where the work time is shorter than planned, loss such as redundant personnel occurs.

Furthermore, some parts to be replaced in maintenance work are high in the cost for acquisition or require a long time for acquisition, and a relatively long lead time is often required during the time from planning to execution of maintenance. In a situation where the cause of decrease in internal pressure is unknown, the part to be replaced cannot be identified, and it is also difficult to prepare a maintenance plan.

The disclosed technology has been made in view of the above points, and aims to aid preparation of a tire maintenance plan.

Solution to Problem

A tire monitoring device according to a first aspect of the disclosed technology includes: an acquisition unit that acquires internal pressure information indicating a transition of an internal pressure of a tire; a prediction unit that predicts a timing at which the internal pressure of the tire will reach a threshold, on the basis of a change pattern that is a pattern of internal pressure change indicated by the internal pressure information; and an output unit that outputs timing information indicating the predicted timing.

A tire monitoring device according to a second aspect of the disclosed technology is the tire monitoring device according to the first aspect, in which the prediction unit predicts the timing on the basis of the rate of change in the internal pressure indicated by the internal pressure information.

A tire monitoring device according to a third aspect of the disclosed technology is the tire monitoring device according to the first or second aspect, in which the prediction unit successively predicts the timing, and the output unit successively updates and outputs the timing information.

A tire monitoring device according to a fourth aspect of the disclosed technology is the tire monitoring device according to any one of the first to third aspects, in which the output unit outputs the timing information to a predetermined device and/or uploads the timing information to a website.

A tire monitoring device according to a fifth aspect of the disclosed technology is the tire monitoring device according to any one of the first to fourth aspects, in which the acquisition unit acquires the internal pressure information about each tire among a plurality of tires provided in each vehicle among a plurality of vehicles, the prediction unit predicts the timing for each vehicle and each tire mounting position, and the output unit outputs the timing information for each vehicle and each tire mounting position.

A tire monitoring device according to a sixth aspect of the disclosed technology is the tire monitoring device according to the first to fifth aspects, in which the output unit outputs, as the timing information, plotted data of the result of prediction of the timing to a corresponding position on a chart in which a first axis indicates the date on which the internal pressure of the tire will reach a threshold, and a second axis indicates the rate of change in the internal pressure of the tire.

A tire monitoring device according to a seventh aspect of the disclosed technology is the tire monitoring device according to the sixth aspect, in which the output unit reflects an accumulated number of times of previously performed maintenance on the size of a point plotted on the chart, for each vehicle and each tire mounting position.

A tire monitoring device according to an eighth aspect of the disclosed technology is the tire monitoring device according to the fifth aspect, further including a derivation unit that derives a maintenance execution priority order for each tire among the plurality of tires, on the basis of the change pattern indicated by the internal pressure information and the predicted timing.

A tire monitoring device according to a ninth aspect of the disclosed technology is the tire monitoring device according to any one of the first to eighth aspects, further including an estimation unit that estimates at least one cause of the internal pressure change, on the basis of the change pattern, in which the output unit outputs cause information indicating the estimated cause(s).

A tire monitoring method according to a tenth aspect of the disclosed technology is implemented by a computer to execute processing including: acquiring internal pressure information indicating a transition of an internal pressure of a tire; predicting a timing at which the internal pressure of the tire will reach a threshold, on the basis of a change pattern that is a pattern of internal pressure change indicated by the internal pressure information; and outputting timing information indicating the predicted timing.

A tire monitoring program according to an eleventh aspect of the disclosed technology is a program for causing a computer to execute processing including: acquiring internal pressure information indicating a transition of an internal pressure of a tire; predicting a timing at which the internal pressure of the tire will reach a threshold, on the basis of a change pattern that is a pattern of internal pressure change indicated by the internal pressure information; and outputting timing information indicating the predicted timing.

Advantageous Effects of Invention

According to the disclosed technology, it is possible to aid preparation of a tire maintenance plan.

BRIEF DESCRIPTION OF DRAWINGS

Fig. 1 is a diagram illustrating an example configuration of a tire monitoring system according to an embodiment of the disclosed technology.
Fig. 2 is a diagram illustrating an example of the hardware configuration of a tire monitoring device according to an embodiment of the disclosed technology.
Fig. 3 is a functional block diagram illustrating an example of the functional configuration of a tire monitoring device according to an embodiment of the disclosed technology.
Fig. 4 is a graph showing an example of internal pressure change patterns of tires indicated by internal pressure information according to an embodiment of the disclosed technology.
Fig. 5 shows graphs illustrating an example of reference patterns according to an embodiment of the disclosed technology.
Fig. 6A is a graph showing an example of an internal pressure change pattern of a tire before and after maintenance.
Fig. 6B is a graph showing an example of an internal pressure change pattern of a tire before and after maintenance.
Fig. 7 is a flowchart illustrating an example flow of a process to be conducted by the CPU of a tire monitoring device executing a tire monitoring program according to an embodiment of the disclosed technology.
Fig. 8 is a diagram illustrating an example of the display mode of cause information according to an embodiment of the disclosed technology.
Fig. 9A is a graph showing an example of an internal pressure change pattern of a tire.
Fig. 9B is a graph showing an example of an internal pressure change pattern of a tire.
Fig. 10 is a functional block diagram illustrating an example of the functional configuration of a tire monitoring device according to an embodiment of the disclosed technology.
Fig. 11A is a graph illustrating an example of the mode in which a prediction unit predicts a threshold reaching timing according to an embodiment of the disclosed technology.
Fig. 11B is a graph illustrating an example of the mode in which a prediction unit predicts a threshold reaching timing according to an embodiment of the disclosed technology.

Fig. 12 is a flowchart illustrating an example flow of a process to be conducted by the CPU of a tire monitoring device executing a tire monitoring program according to an embodiment of the disclosed technology.

Fig. 13 is a diagram illustrating an example of the display mode of timing information according to an embodiment of the disclosed technology.

Fig. 14 is a diagram illustrating an example of the display mode of timing information according to an embodiment of the disclosed technology.

Fig. 15 is a functional block diagram illustrating an example of the functional configuration of a tire monitoring device according to an embodiment of the disclosed technology.

Fig. 16 is a diagram illustrating another example of the display mode of timing information according to an embodiment of the disclosed technology.

Fig. 17 is a functional block diagram illustrating an example of the functional configuration of a tire monitoring device according to an embodiment of the disclosed technology.

Fig. 18 is a flowchart illustrating an example flow of a process to be conducted by the CPU of a tire monitoring device executing a tire monitoring program according to an embodiment of the disclosed technology.

Fig. 19 is a diagram illustrating an example of the display mode of cause information, timing information, and a priority order according to an embodiment of the disclosed technology.

Fig. 20 is a functional block diagram illustrating an example of the functional configuration of a tire monitoring device according to an embodiment of the disclosed technology.

DESCRIPTION OF EMBODIMENTS

In the following, an example of embodiments of the disclosed technology is described, with reference to the drawings. Note that the same or equivalent constituent elements and components are denoted by the same reference signs in the respective drawings, and repetitive explanations will be avoided below.

(First Embodiment)

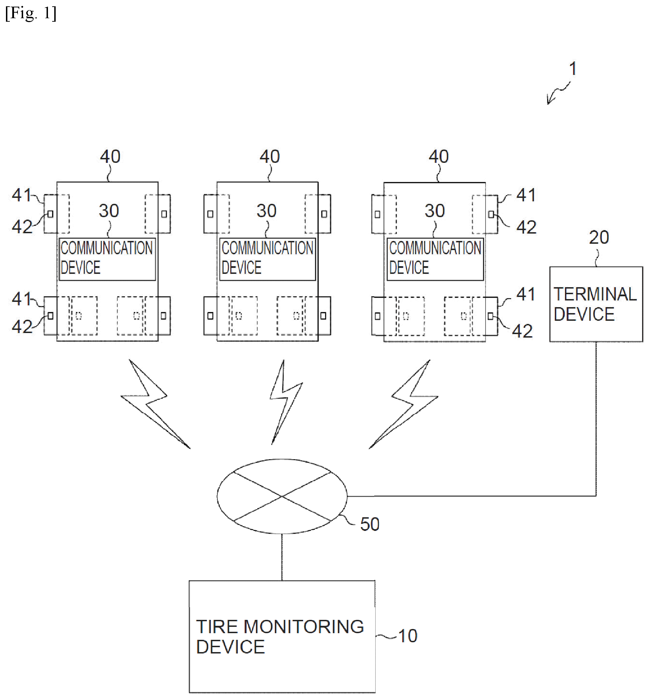

Fig. 1 is a diagram illustrating an example configuration of a tire monitoring system 1 according to an embodiment of the disclosed technology. The tire monitoring system 1 is a system for individually monitoring each tire of a plurality of tires 41 mounted on vehicles 40 to be monitored. The tire monitoring system 1 includes internal pressure sensors 42, communication devices 30, a tire monitoring device 10, and a terminal device 20. As another example, one passenger car, a bus, a small truck, or the like may be set as a monitoring target, for example, and the number of mounted tires may be three or four in some other pattern.

Although Fig. 1 shows three vehicles 40 each equipped with six tires 41, the number of vehicles to be monitored by the tire monitoring system 1 may be smaller than three, or may be four or larger. The number of tires 41 mounted on each vehicle 40 is not limited to any particular number either. The type of the vehicles 40 may be a business vehicle such as a dump truck that is used in a mine or a construction site, for example, but is not limited to this.

The internal pressure sensors 42 are provided on the respective tires 41 of each vehicle 40. An internal pressure sensor 42 outputs a measurement value of an internal pressure that is the pressure of the air inside the corresponding tire 41. An output of an internal pressure measurement value by the internal pressure sensor 42 may be made at any time, or may be made intermittently. Intermittent outputs may be made at regular intervals or on an irregular basis.

The communication devices 30 are mounted on the respective vehicles 40. A communication device 30 aggregates the measurement values of the internal pressures output from the respective internal pressure sensors 42 provided on the respective tires 41 of the corresponding vehicle 40, and transmits the measurement values to the tire monitoring device 10. That is, in the present embodiment, each of the communication devices 30 collectively transmits the measurement values of the internal pressures of the six tires 41 mounted on the corresponding vehicle 40 to the tire monitoring device 10.

Vehicle identification information (vehicle ID) for identifying the corresponding vehicle 40, and position identification information (position ID) for identifying the mounting position of the corresponding tire 41 are attached to an internal pressure measurement value. With this arrangement, the tire monitoring device 10 can identify from which tire an internal pressure measurement value transmitted from each communication device 30 has been obtained, and at which position of which vehicle the tire is mounted. Each of the communication devices 30 transmits an internal pressure measurement value to the tire monitoring device 10 by wireless communication via a network 50 such as the Internet. The transmission of an internal pressure measurement value is performed at any time or intermittently. That is, time-series data of internal pressure measurement values of each vehicle 40 and each mounting position of the tires 41 is transmitted to the tire monitoring device 10. The time-series data of internal pressure measurement values of each vehicle and each tire mounting position will be hereinafter referred to as "internal pressure information". The internal pressure information is real-time information indicating transitions of the internal pressures of the tires 41 of each vehicle and at the respective tire mounting positions.

The tire monitoring device 10 is a server computer that has a function of individually monitoring each of the tires 41 mounted on each of the vehicles 40. The tire monitoring device 10 may be installed at a site where the vehicles 40 operate, or may be installed at a remote place separated from the site, for example.

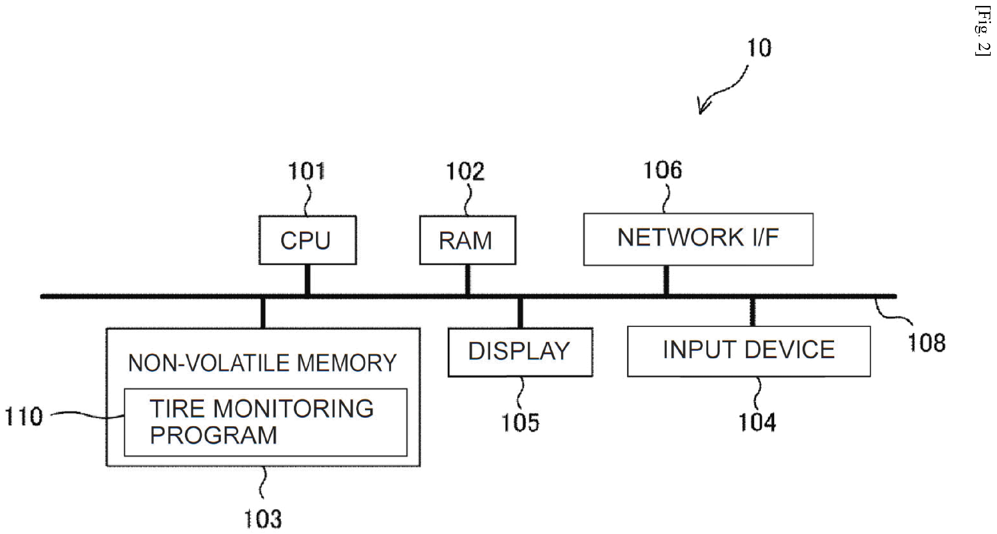

Fig. 2 is a diagram illustrating an example of the hardware configuration of the tire monitoring device 10. The tire monitoring device 10 includes a central processing unit (CPU) 101, a random access memory (RAM) 102, a nonvolatile memory 103, an input device 104 including a keyboard and a mouse, a display 105, and a network interface 106. These pieces of hardware are connected to a bus 108.

The display 105 may be a touch panel display. The network interface 106 is an interface for performing communication via the network 50. The communication system may be of either a wired type or a wireless type. For example, a system conforming to an existing wireless communication standard such as Wi-Fi (registered trademark) can be used for wireless communication.

The nonvolatile memory 103 is nonvolatile storage media such as a hard disk and a flash memory. A tire monitoring program 110 is stored in the nonvolatile memory 103. The RAM 102 is a work memory for the CPU 101 to execute processing. The CPU 101 loads the tire monitoring program 110 stored in the nonvolatile memory 103 into the RAM 102, and executes processing in accordance with the tire monitoring program 110.

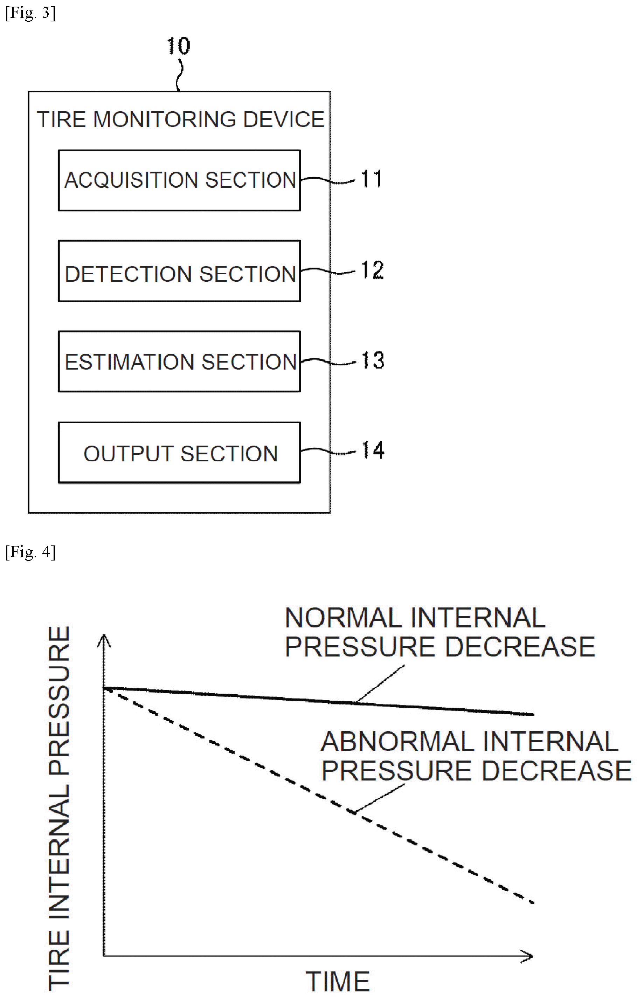

Fig. 3 is a functional block diagram illustrating an example of the functional configuration of the tire monitoring device 10. The tire monitoring device 10 includes an acquisition unit 11, a detection unit 12, an estimation unit 13, and an output unit 14. When the CPU 101 executes the tire monitoring program 110, the tire monitoring device 10 functions as the acquisition unit 11, the detection unit 12, the estimation unit 13, and the output unit 14.

The acquisition unit 11 acquires the internal pressure information that is time-series data of measurement values of internal pressures of the tires of the respective vehicles and the respective tire mounting positions, the internal pressure information being transmitted from the respective communication devices 30.

The detection unit 12 detects an abnormal internal pressure change, for each vehicle and at each tire mounting position, on the basis of the internal pressure change patterns (hereinafter referred to as change patterns) indicated by the internal pressure information acquired by the acquisition unit 11. Fig. 4 is a graph showing an example of change patterns of a tire 41, as indicated by the internal pressure information. In Fig. 4, the change pattern in a case where a normal internal pressure change occurs is indicated by a solid line, and the change pattern in a case where an abnormal internal pressure change occurs is indicated by a dashed line. Note that a "normal internal pressure change" means a decrease in internal pressure due to natural leakage, and an "abnormal internal pressure change" means a decrease in internal pressure due to a cause other than natural leakage.

As shown in Fig. 4, in a case where a normal internal pressure change is occurring, the internal pressure of the tire gradually decreases with time. On the other hand, in a case where an abnormal internal pressure change is occurring, the rate of decrease in the internal pressure of the tire is higher than that in the case of a normal internal pressure change. In a case where the rate of decrease in the internal pressure of the tire indicated by the internal pressure information (which is the amount of decrease in the internal pressure of the tire within a predetermined period) exceeds a predetermined value, the detection unit 12 may determine that an abnormal internal pressure change is occurring in the tire 41. As the detection unit 12 detects an abnormal internal pressure change on the basis of the internal pressure change patterns, it is possible to detect an abnormality in the tire before the internal pressure of the tire falls below a threshold. Also, the detection unit 12 may detect an abnormal internal pressure change by comparing pieces of the internal pressure information about the respective tires provided in the respective vehicles with one another. Since it is considered that the characteristics of the change pattern in a case where an abnormal internal pressure change is occurring are different from the characteristics of the change pattern in a case where a normal internal pressure change is occurring, it is possible to detect an abnormal internal pressure change by comparing pieces of the internal pressure information about the respective tires with one another.

In a case where an abnormal internal pressure change has been detected by the detection unit 12, the estimation unit 13 estimates at least one cause of the abnormal internal pressure change in the tire from which the abnormal internal pressure change has been detected. The estimation unit 13 estimates a cause on the basis of the internal pressure change pattern indicated by the internal pressure information.

Examples of causes of internal pressure change in a tire 41 include an abnormality in a valve, a crack in a rim, an abnormality in an O-ring, and a cut in a side. The mode of internal pressure change varies depending on the cause. That is, the internal pressure change pattern indicates a pattern specific to the cause. Accordingly, by analyzing the internal pressure change pattern indicated by the internal pressure information, it is possible to estimate the cause of the internal pressure change.

For example, the estimation unit 13 may estimate a cause of internal pressure change by comparing the internal pressure change pattern indicated by the internal pressure information with a plurality of reference patterns associated with the respective causes among a plurality of causes of internal pressure change. More specifically, the estimation unit 13 may estimate, as a cause of the internal pressure change, the cause corresponding to the reference pattern having the highest similarity with the internal pressure change pattern indicated by the internal pressure information among the plurality of reference patterns prepared for each cause of internal pressure change.

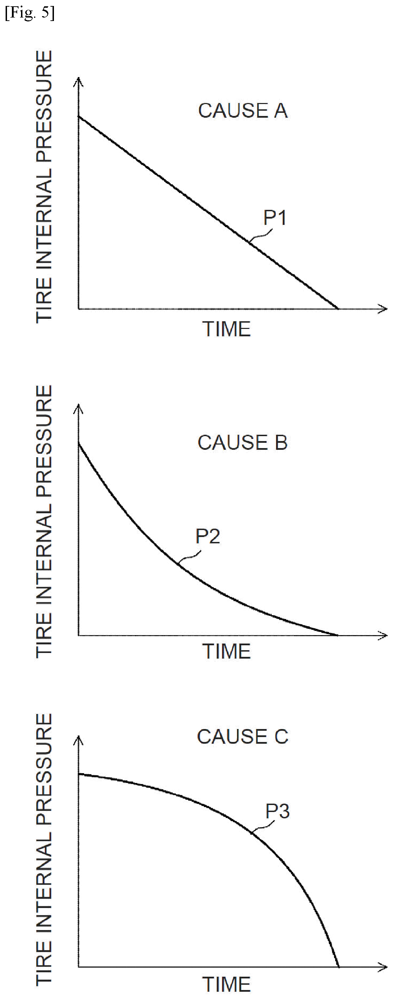

The reference patterns may be representative patterns or typical patterns of the internal pressure changes caused by the corresponding cause, or may be patterns created on the basis of the past actual examples. Fig. 5 is graphs showing examples of reference patterns. In Fig. 5, three reference patterns P1, P2, and P3 are shown as examples. The reference pattern P1 is a representative pattern or a typical pattern of internal pressure change that is caused by a cause A. The reference pattern P2 is a representative pattern or a typical pattern of internal pressure change that is caused by a cause B. The reference pattern P3 is a representative pattern or a typical pattern of internal pressure change that is caused by a cause C. Note that Fig. 5 is designed to facilitate understanding of the disclosed technology, and does not necessarily indicate that the pattern and the phenomenon of the cause correspond to each other.

Also, the estimation unit 13 may estimate a cause of internal pressure change, using a classification model trained by machine learning. The classification model is a model that receives an input of a change pattern, and outputs the cause corresponding to the input change pattern. The classification model is learned by machine learning using a combination of change patterns and correct data indicating the causes corresponding to the change patterns as training data.

Further, the estimation unit 13 may estimate a cause of internal pressure change, on the basis of the rate of change in internal pressure indicated by the internal pressure information. The rate of decrease in the internal pressure of the tire 41 varies depending on the cause. Accordingly, it is possible to estimate the cause of internal pressure change, on the basis of the internal pressure change rate indicated by the internal pressure information.

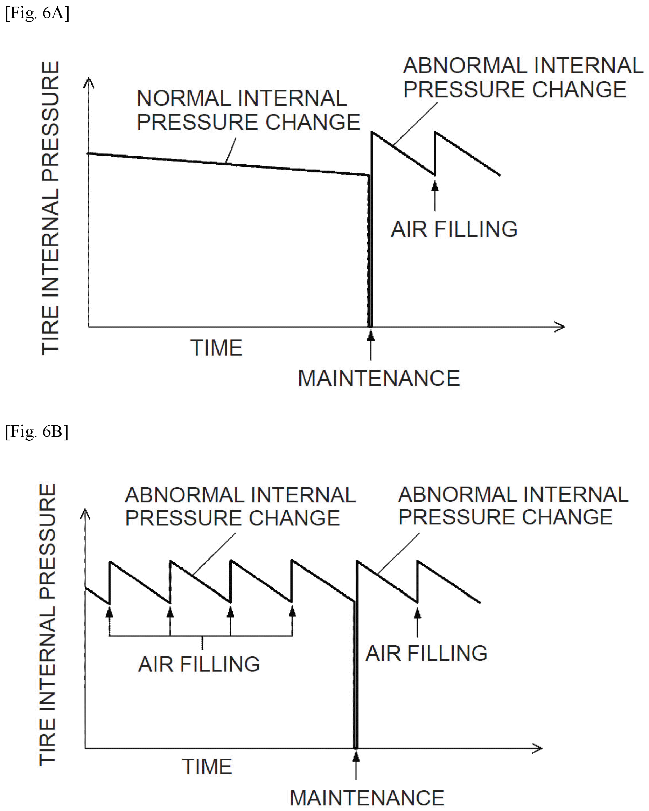

Also, the estimation unit 13 may estimate a cause of internal pressure change, on the basis of the internal pressure change patterns before and after tire maintenance indicated by the internal pressure information. As illustrated in Fig. 6A, for example, in a case where a tire shows a normal change pattern before maintenance but shows an abnormal change pattern after the maintenance, it is considered that the abnormal internal pressure change occurred due to defective maintenance work. Therefore, in this case, it is possible to exclude the causes unrelated to maintenance work as the causes of the abnormal internal pressure change after the maintenance, and it is possible to estimate a cause other than the excluded ones.

On the other hand, as shown in Fig. 6B, in a case where a change pattern showing an abnormal internal pressure change appears both before and after maintenance of a tire, it is considered that the internal pressure change was not caused by the part replaced in the maintenance work and defective maintenance work. Accordingly, in this case, it is possible to exclude the causes related to a replaced part and defective work, and estimate a cause other than the excluded ones. In this manner, it is possible to estimate a cause on the basis of the internal pressure change patterns before and after tire maintenance indicated by the internal pressure information.

Note that, at a time of maintenance, all the air in the tire is usually released once. Accordingly, a point of time at which the tire internal pressure indicated by the internal pressure information is zero can be regarded as the point of maintenance time. Alternatively, the communication device 30 may be accessed from outside, and information indicating the point of maintenance time may be added to the internal pressure information.

The output unit 14 outputs cause information indicating the cause of the internal pressure change estimated by the estimation unit 13. The output unit 14 may upload the cause information to a predetermined website.

The terminal device 20 is a communication terminal device that is used by an operator who integrally manages the vehicles 40. The terminal device 20 may be installed at a site where the vehicles 40 operate, or may be installed at a remote place separated from the site. Alternatively, the terminal device 20 may be installed in each of the vehicles 40. In this case, the terminal device 20 may be used by the driver of each vehicle 40.

The terminal device 20 accesses the website to which the cause information has been uploaded, so that the cause information can be displayed on the display (not shown) of the terminal device 20. Thus, the operator can grasp in real time the occurrence of an abnormal internal pressure change in a tire and the cause thereof, for each vehicle and at each tire mounting position. Note that the output unit 14 may transmit the cause information directly to the terminal device 20.

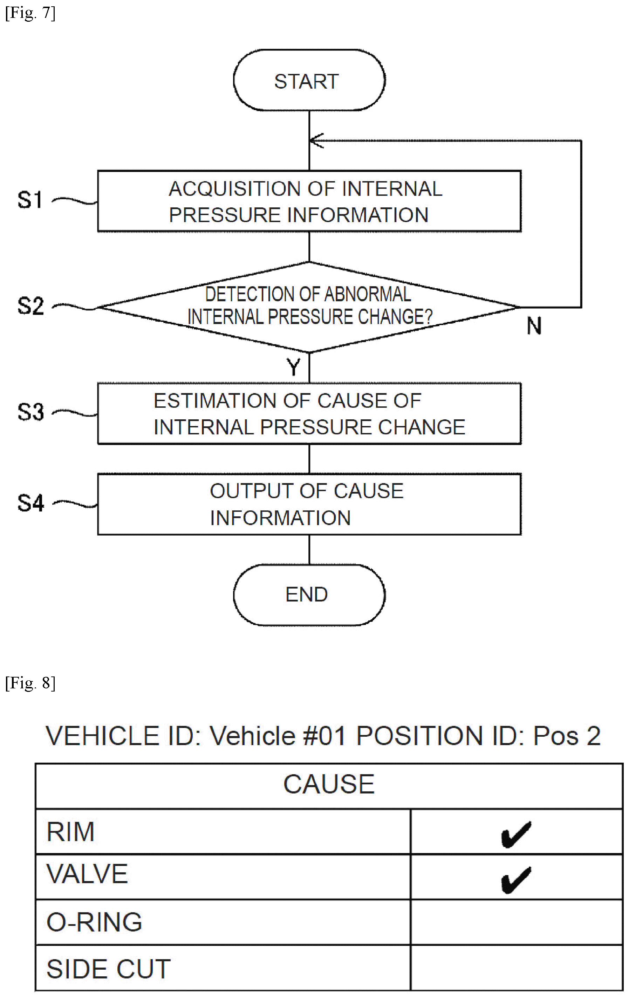

Fig. 7 is a flowchart illustrating an example flow of a process to be conducted by the CPU 101 of the tire monitoring device 10 executing the tire monitoring program 110.

In step S1, the acquisition unit 11 acquires internal pressure information that is time-series data of measurement values of tire internal pressure of each vehicle and at each tire mounting position, the internal pressure information being transmitted from each communication device 30.

In step S2, the detection unit 12 determines whether an abnormal internal pressure change is occurring, for each vehicle and at each tire mounting position, on the basis of the internal pressure change pattern indicated by the internal pressure information acquired in step S1. If an abnormal internal pressure change is detected, the process proceeds to step S3, and, if an abnormal internal pressure change is not detected, the process returns to step S1.

In step S3, the estimation unit 13 estimates at least one cause of the abnormal internal pressure change, on the basis of the internal pressure change pattern indicated by the internal pressure information acquired in step S1, for the tire from which the abnormal internal pressure change has been detected.

In step S4, the output unit 14 outputs cause information indicating the cause of the internal pressure change estimated in step S3. The output unit 14 may upload the cause information to a predetermined website.

As the terminal device 20 accesses the predetermined website, the cause information output in step S4 is displayed on the display (not shown) of the terminal device 20. Thus, the operator who is using the terminal device 20 can grasp in real time the occurrence of an abnormal internal pressure change in a tire and the cause thereof, for each vehicle and at each tire mounting position. Note that the output unit 14 may transmit the cause information directly to the terminal device 20 in step S4.

Fig. 8 is a diagram illustrating an example of the display mode of the cause information displayed on the display of the terminal device 20. Vehicle identification information (vehicle ID) for identifying the corresponding vehicle and position identification information (position ID) for identifying the mounting position of the corresponding tire are given to the cause information. The cause information is displayed in a mode in which it is possible to grasp which one of previously assumed causes matches the estimated cause. The cause information may be displayed in the form of a list as illustrated in Fig. 8, for example.

As described above, the tire monitoring device 10 according to the first embodiment of the disclosed technology includes: the acquisition unit 11 that acquires the internal pressure information indicating the transition of tire internal pressure; the detection unit 12 that detects an abnormal internal pressure change on the basis of the change pattern indicated by the internal pressure information; the estimation unit 13 that estimates at least one cause of the internal pressure change on the basis of the internal pressure change pattern indicated by the internal pressure information for the tire from which the abnormal internal pressure change has been detected; and the output unit 14 that outputs the cause information indicating the estimated cause.

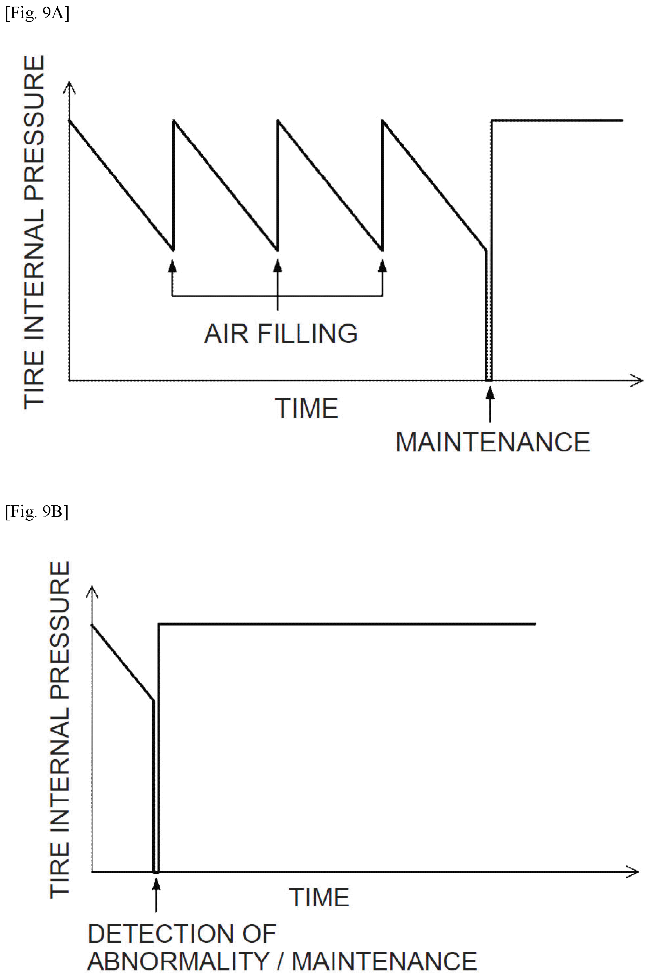

With an existing TPMS, it is possible to issue an alarm in a case where tire internal pressure decreases, but it is not possible to estimate and report the cause of the decrease in internal pressure. Because of this, as illustrated in Fig. 9A, for an abnormality that is not eliminated simply by air refilling, there might be a case where only the air refilling is performed, and the user notices the abnormality while repeating the air refilling in response to the alarm that is frequently issued. Until the abnormality is noticed, the tire is used at an internal pressure outside the appropriate range. As a result, the durability of the tire becomes poorer, and the customer value such as safety and long-term use is damaged. Also, a plurality of causes can be considered as causes of decrease in the internal pressure of a tire. Therefore, at the site of maintenance, it is necessary to perform a plurality of inspections to investigate the causes, and the work at the site becomes complicated.

Also, the time required for maintenance work greatly varies depending on each cause of decrease in internal pressure, and therefore, it is difficult to predict the work time in a situation where the cause is unknown. In a case where the work time is longer than planned, it is necessary to modify the initial maintenance plan. On the other hand, in a case where the work time is shorter than planned, loss such as redundant personnel occurs.

Furthermore, some parts to be replaced in maintenance work are high in the cost for acquisition or require a long time for acquisition, and a relatively long lead time is often required during the period from planning to execution of maintenance. In a situation where the cause of decrease in internal pressure is unknown, the part to be replaced cannot be identified, and it is also difficult to prepare a maintenance plan.

With the tire monitoring device 10 according to the first embodiment of the disclosed technology, the cause of an abnormal internal pressure change is estimated with respect to the tire from which the abnormal internal pressure change has been detected, and the cause information indicating the estimated cause is presented. Thus, it is possible to immediately take appropriate measures after abnormality detection, as illustrated in Fig. 9B. In other words, it is possible to avoid a situation in which appropriate measures are not taken while the abnormality goes unnoticed over a long period of time.

Also, with the tire monitoring device 10, the cause of internal pressure change is estimated. Thus, it is possible to omit some or all of the inspection for investigating the cause, and it is possible to reduce the burden of the maintenance work. Furthermore, by estimating the cause of internal pressure change, it is possible to predict the time required for the maintenance work, and grasp the part to be replaced. This makes it possible to prepare a maintenance plan at a relatively early stage.

As described above, with the tire monitoring device 10 according to the first embodiment of the disclosed technology, it is possible to aid the investigation of the cause of internal pressure change in a tire.

(Second Embodiment)

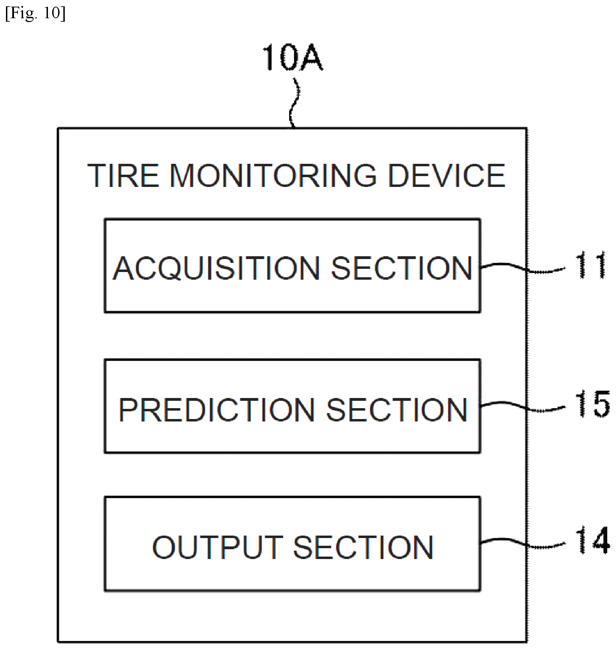

Fig. 10 is a functional block diagram illustrating an example of the functional configuration of a tire monitoring device 10A according to a second embodiment of the disclosed technology. The tire monitoring device 10A includes an acquisition unit 11, a prediction unit 15, and an output unit 14. As a CPU 101 executes a tire monitoring program 110, the tire monitoring device 10A functions as the acquisition unit 11, the prediction unit 15, and the output unit 14.

The acquisition unit 11 acquires internal pressure information that is time-series data of measurement values of internal pressures of the tires of the respective vehicles and the respective tire mounting positions, the internal pressure information being transmitted from each communication device 30.

The prediction unit 15 predicts the timing at which the internal pressure of the corresponding tire will reach a threshold (this timing will be hereinafter referred to as the threshold reaching timing), on the basis of a change pattern that is a pattern of internal pressure change, the change pattern being indicated by the internal pressure information. The "threshold" is an internal pressure level at which maintenance is recommended, for example. Any value can be set as the threshold. The prediction unit 15 predicts the threshold reaching timing for each vehicle and each tire mounting position, on the basis of the internal pressure change pattern for each vehicle and each tire mounting position.

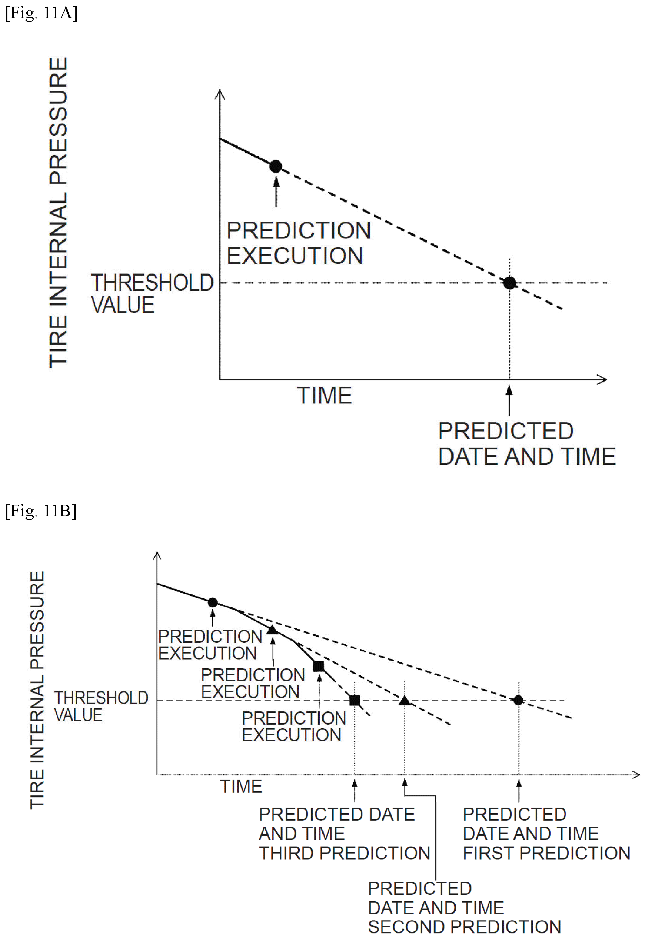

Figs. 11A and 11B are graphs each illustrating an example of the mode in which the prediction unit 15 predicts the threshold reaching timing. The prediction unit 15 predicts the threshold reaching timing on the basis of the rate of change in internal pressure indicated by the internal pressure information. That is, the prediction unit 15 identifies the rate of change (the slope of the change pattern) in the internal pressure at the time of prediction, and predicts the time and date of reaching the threshold in a case where the rate of change is kept.

Here, it is assumed that the rate of change in internal pressure is not constant. For example, in a case where the rate of change in internal pressure increases with decrease in internal pressure, the internal pressure reaches the threshold at a timing earlier than the initially predicted threshold reaching timing. Therefore, as illustrated in Fig. 11B, the prediction unit 15 successively predicts the threshold reaching timing, and successively updates the prediction result. Thus, even in a case where the rate of change in internal pressure is not constant, it is possible to reduce the difference between the prediction result and the actual timing. The prediction by the prediction unit 15 may be conducted regularly or irregularly.

The output unit 14 outputs timing information indicating the threshold reaching timing predicted by the prediction unit 15. The output unit 14 successively updates and outputs the timing information in response to the prediction unit 15 successively predicting the threshold reaching timing. That is, the prediction unit 15 successively performs a process of predicting the threshold reaching timing on the basis of the latest internal pressure information, and the output unit 14 successively performs a process of outputting the timing information indicating the latest prediction result. The output unit 14 may upload the timing information to a predetermined website.

As a terminal device 20 accesses the predetermined website, the timing information output by the output unit 14 can be displayed on a display (not shown) of the terminal device 20. Thus, the operator can grasp in advance the timing at which the internal pressure of a tire will reach the threshold (or the timing at which maintenance is to be conducted), with respect to each vehicle and each tire mounting position. Note that the output unit 14 may transmit the timing information directly to the terminal device 20.

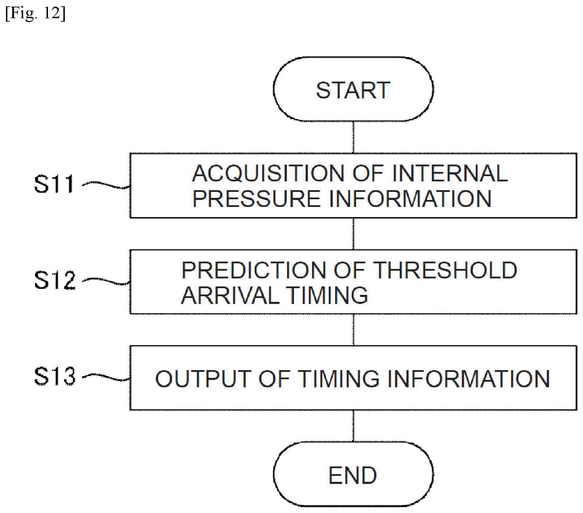

Fig. 12 is a flowchart illustrating an example flow of a process to be conducted by the CPU 101 of the tire monitoring device 10A executing the tire monitoring program 110.

In step S11, the acquisition unit 11 acquires internal pressure information that is time-series data of measurement values of tire internal pressure of each vehicle and at each tire mounting position, the internal pressure information being transmitted from each communication device 30.

In step S12, the prediction unit 15 predicts, for each tire 41 of each vehicle 40, the threshold reaching timing at which the internal pressure of the tire will reach the threshold, on the basis of a change pattern that is the internal pressure change pattern indicated by the internal pressure information acquired in step S11.

In step S13, the output unit 14 outputs timing information indicating the threshold reaching timing predicted in step S12. The output unit 14 may upload the timing information to a predetermined website.

As the terminal device 20 accesses the predetermined website, the timing information output in step S13 is displayed on the display (not shown) of the terminal device 20. Thus, the operator who is using the terminal device 20 can grasp in advance the timing at which the internal pressure of a tire will reach the threshold (or the timing at which maintenance is to be conducted), with respect to each vehicle and each tire mounting position. Note that the output unit 14 may transmit the timing information directly to the terminal device 20 in step S13.

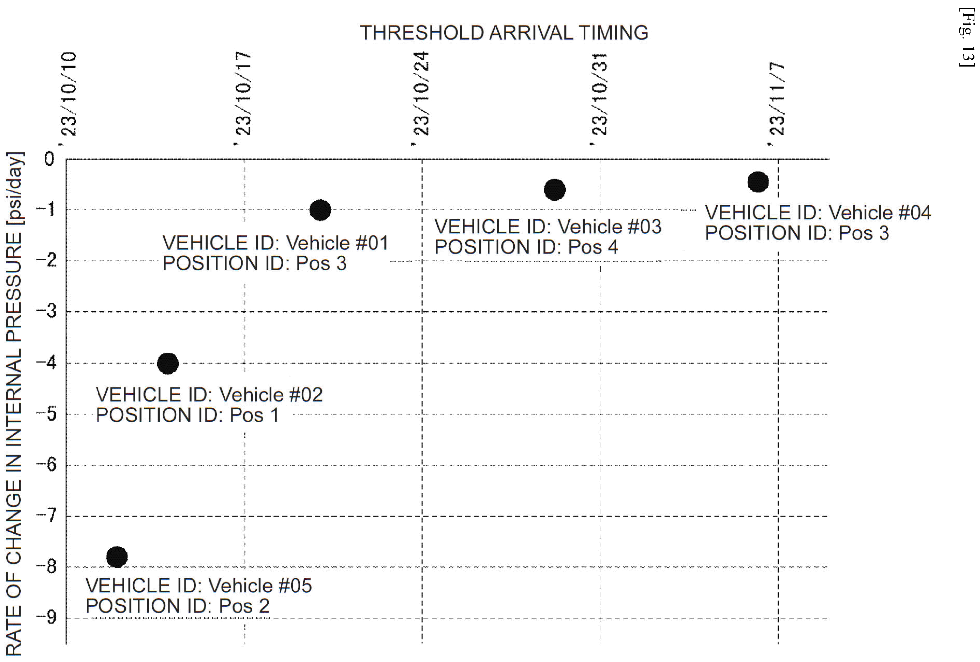

Fig. 13 is a diagram illustrating an example of the display mode of the timing information displayed on the display of the terminal device 20. Vehicle identification information (vehicle ID) for identifying the corresponding vehicle and position identification information (position ID) for identifying the mounting position of the corresponding tire are given to the timing information. For example, as illustrated in Fig. 13, the timing information may be displayed with a chart in which the date on which the internal pressure of the tire will reach the threshold is shown on a first axis (horizontal axis), and the rate of change in the internal pressure of the tire is shown on a second axis (vertical axis). The output unit 14 may output plotted data of the result of prediction performed by the prediction unit 15 as the timing information to the corresponding position on the chart. As the timing information is displayed with the above-mentioned chart, the operator can easily grasp which tire of which vehicle has the internal pressure that will reach the threshold at the earliest timing. Furthermore, as the rate of change in the internal pressure of the tire is also displayed, the severity of the condition of each tire can be easily grasped.

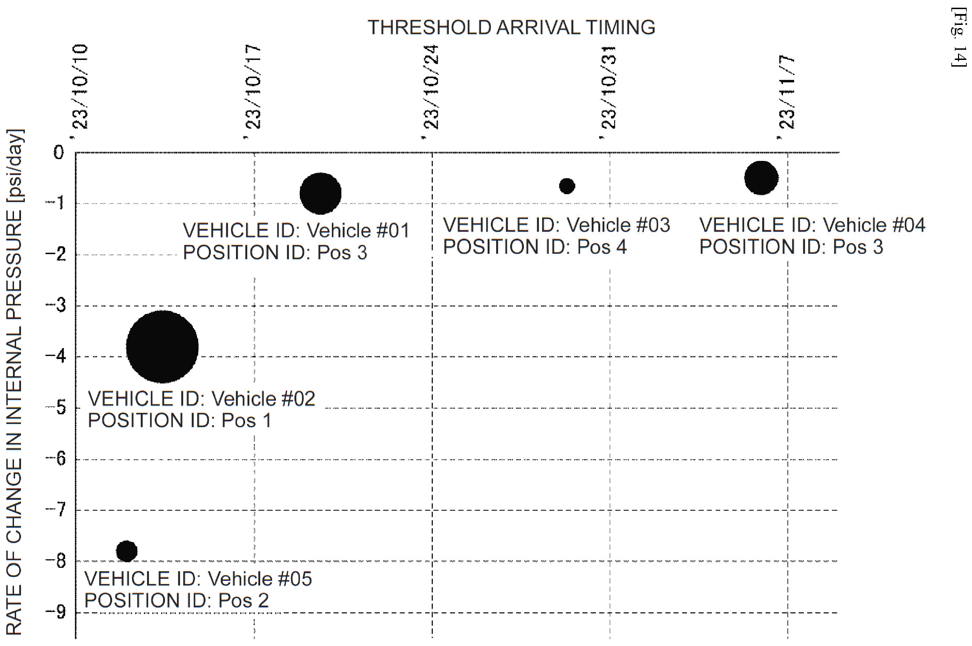

Fig. 14 is a diagram illustrating another example of the display mode of the timing information displayed on the display of the terminal device 20. As illustrated in Fig. 14, the output unit 14 may reflect the cumulative number of times of maintenance performed in the past on the size of each point plotted on the chart, with respect to each vehicle and each tire mounting position. On the chart shown in Fig. 14, the size of a plotted point is larger for a larger cumulative number of times of maintenance performed in the past, with respect to the mounting position of the tire of the vehicle. Information indicating the cumulative number of times of maintenance for each vehicle and each tire mounting position may be stored in the nonvolatile memory 103 of the tire monitoring device 10A, for example. As the accumulated number of times of maintenance is reflected on the size of each of the points plotted on the chart, the operator can estimate the state of the tire and the difficulty level of handling, and use the state of the tire and the difficulty level of handling as the criteria to determine the priority order in maintenance, with respect to the tires for which the maintenance is planned, for example.

As described above, the tire monitoring device 10A according to the second embodiment of the disclosed technology includes: the acquisition unit 11 that acquires internal pressure information indicating the transition of the internal pressure of a tire; the prediction unit 15 that predicts the timing at which the internal pressure of the tire will reach the threshold on the basis of the internal pressure change pattern indicated by the internal pressure information; and the output unit 14 that outputs timing information indicating the predicted timing.

At present, in a case where an alarm is issued from a TPMS, measures are taken to perform maintenance on the target tire. However, if the target tire can be included in a maintenance plan at an earlier stage than the issuance of an alarm, it should be easier to secure resources such as equipment, parts, and personnel. Further, with the current measures being taken into consideration, in a case where an unexpected situation such as a rapid increase in the rate of decrease in internal pressure occurs, for example, emergency measures need to be taken, and the initial maintenance plan needs to be significantly modified in some cases. In this case, it may be difficult to secure resources such as equipment, parts, and personnel.

With the tire monitoring device 10A according to the second embodiment of the disclosed technology, the timing information indicating the timing at which the internal pressure of a tire will reach the threshold is presented, and thus, the target tire can be included in the maintenance plan before the internal pressure of the tire reaches the threshold. This makes it easier to secure resources such as equipment, parts, and personnel.

Also, with the tire monitoring device 10A according to the present embodiment, prediction of the threshold reaching timing is successively performed, and the timing information is successively updated. Thus, it is possible to obtain an appropriate prediction result even in a case where an unexpected situation such as a rapid increase in the rate of decrease in the internal pressure has occurred. This makes it possible to lower the risk of occurrence of significant modification of the maintenance plan.

As described above, with the tire monitoring device 10 according to the second embodiment of the disclosed technology, it is possible to aid the preparation of a tire maintenance plan.

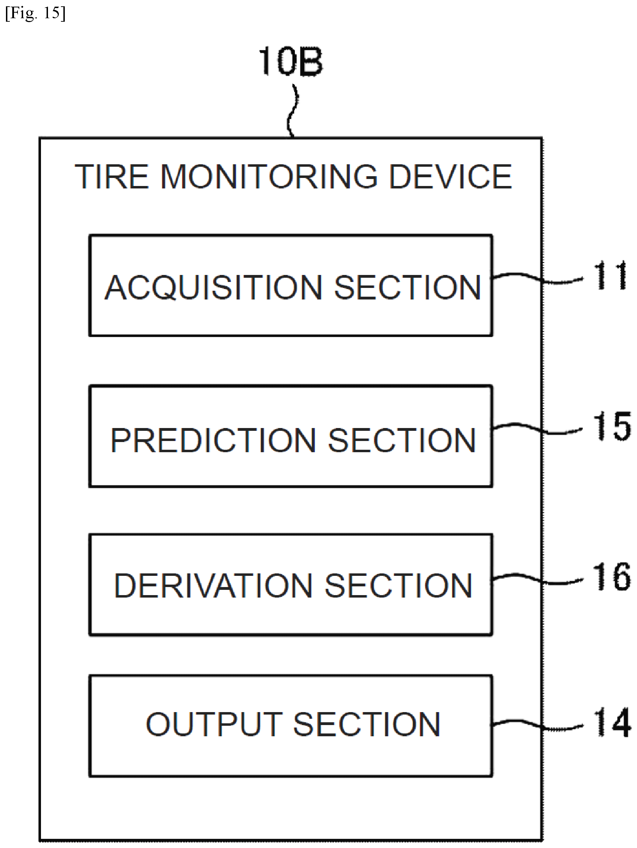

Fig. 15 is a functional block diagram illustrating an example of the functional configuration of a tire monitoring device 10B according to a modification. The tire monitoring device 10B differs from the tire monitoring device 10A (see Fig. 10) in further including a derivation unit 16.

The derivation unit 16 derives the maintenance execution priority order, on the basis of the internal pressure change pattern indicated by the internal pressure information acquired by the acquisition unit 11 and the threshold reaching timing predicted by the prediction unit 15. The derivation unit 16 may derive the priority order, on the basis of the priority Y indicated by Expression (1) shown below. In Expression (1), $X_1$ represents the score corresponding to the internal pressure change rate identified from the internal pressure change pattern. $X_2$ represents the score corresponding to the threshold reaching timing predicted by the prediction unit 15. $X_3$ represents the score corresponding to the cumulative number of times of maintenance performed in the past at the tire mounting position of the vehicle, and $k_1$, $k_2$, and $k_3$ are weighting factors. The derivation unit 16 gives a relatively high priority to a tire having a relatively great value of the priority Y derived using Expression (1). The output unit 14 outputs the priority order derived by the derivation unit 16. Note that the priority may be derived using only one or two of the scores $X_1$, $X_2$, and $X_3$, or the priority may be derived using a score other than the above scores.

$$Y = k_1{\cdot}X_1 + k_2{\cdot}X_2 + k_3{\cdot}X_3 \ ... \ (1)$$

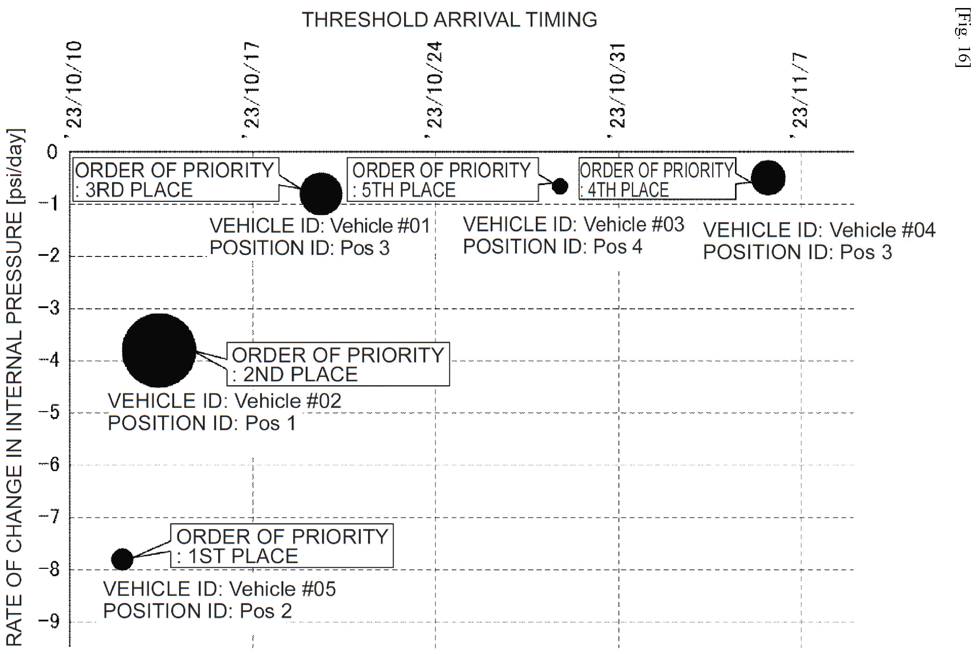

Fig. 16 is a diagram illustrating another example of the display mode of the timing information displayed on the display of the terminal device 20. As illustrated in Fig. 16, the priority order of execution of maintenance of each tire as derived by the derivation unit 16 may be displayed in the vicinity of the corresponding point among a plurality of points obtained by plotting the results of threshold reaching timing prediction.

(Third Embodiment)

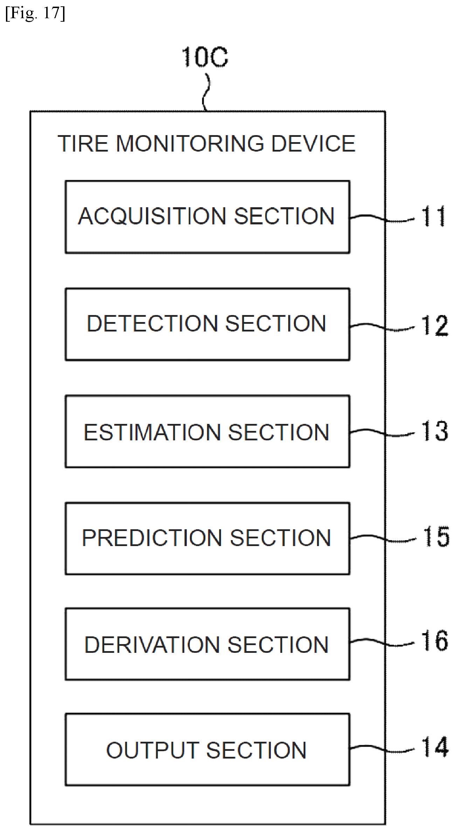

Fig. 17 is a functional block diagram illustrating an example of the functional configuration of a tire monitoring device 10C according to a third embodiment of the disclosed technology. The tire monitoring device 10C includes an acquisition unit 11, a detection unit 12, an estimation unit 13, a prediction unit 15, a derivation unit 16, and an output unit 14. That is, the tire monitoring device 10C has a configuration that is a combination of the tire monitoring device 10 (see Fig. 3) according to the first embodiment and the tire monitoring devices 10A (see Fig. 10) and 10B (see Fig. 15) according to the second embodiment. Details of the functional units are as described above.

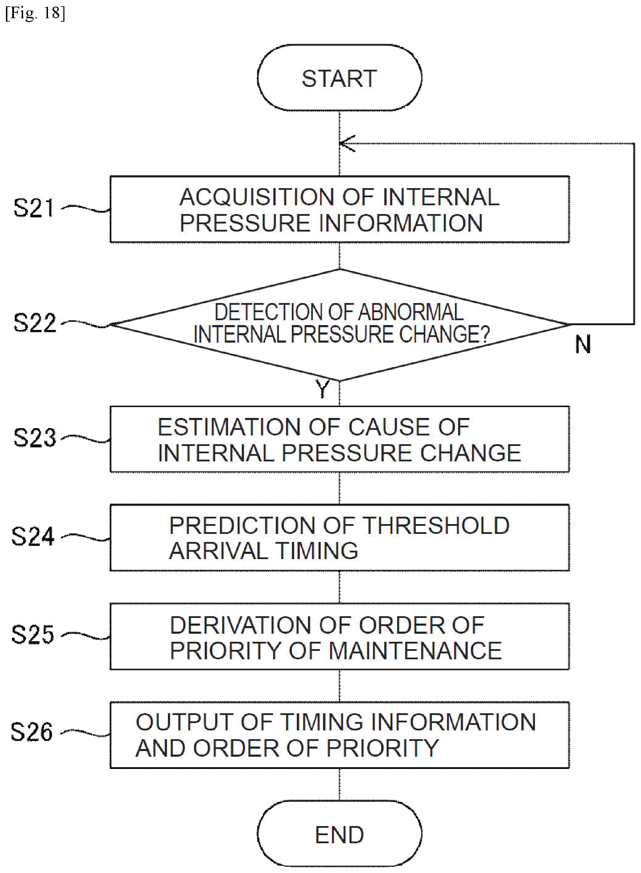

Fig. 18 is a flowchart illustrating an example flow of a process to be conducted by the CPU 101 of the tire monitoring device 10C executing a tire monitoring program 110.

In step S21, the acquisition unit 11 acquires internal pressure information that is time-series data of measurement values of tire internal pressure of each vehicle and at each tire mounting position, the internal pressure information being transmitted from each communication device 30.

In step S22, the detection unit 12 determines whether an abnormal internal pressure change is occurring, for each vehicle and at each tire mounting position, on the basis of the internal pressure change pattern indicated by the internal pressure information acquired in step S21. If an abnormal internal pressure change is detected, the process proceeds to step S23, and, if an abnormal internal pressure change is not detected, the process returns to step S21.

In step S23, the estimation unit 13 estimates at least one cause of the abnormal internal pressure change, on the basis of the internal pressure change pattern indicated by the internal pressure information acquired in step S21, for the tire from which the abnormal internal pressure change has been detected.

In step S24, the prediction unit 15 predicts, for each tire 41 of each vehicle 40, the threshold reaching timing at which the internal pressure of the tire will reach the threshold, on the basis of a change pattern that is the internal pressure change pattern indicated by the internal pressure information acquired in step S21.

In step S25, the derivation unit 16 derives the maintenance execution priority order, on the basis of the internal pressure change pattern indicated by the internal pressure information acquired in step S21 and the threshold reaching timing predicted in step S24. The derivation unit 16 may use the result of the determination in step S22 as an element for deriving the priority order.

In step S26, the output unit 14 outputs timing information indicating the threshold reaching timing predicted in step S24 and the priority order derived in step S25. Note that the output unit 14 may output cause information indicating the cause of the internal pressure change estimated in step S23, together with the timing information and the priority order. The output unit 14 may upload each piece of the above information to a predetermined website.

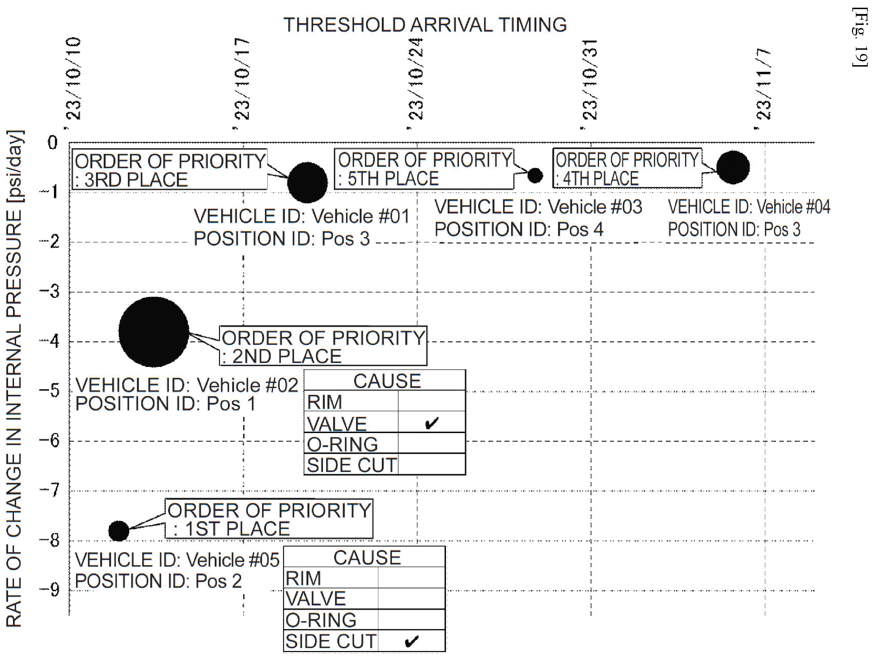

As a terminal device 20 accesses the predetermined website, the cause information, the timing information, and the priority order output by the output unit 14 can be displayed on a display (not shown) of the terminal device 20. Fig. 19 is a diagram illustrating an example of the display mode of each piece of the above information displayed on the display of the terminal device 20. For example, as illustrated in Fig. 19, the timing information may be displayed with a chart in which the date on which the internal pressure of the tire will reach the threshold is shown on a first axis (horizontal axis), and the rate of change in the internal pressure of the tire is shown on a second axis (vertical axis). The output unit 14 may output plotted data of the result of prediction performed by the prediction unit 15 as the timing information to the corresponding position on the chart. Further, the cause information and the priority order of execution of maintenance may be displayed in the vicinity of the corresponding points among a plurality of points obtained by plotting the results of threshold reaching timing prediction.

With the tire monitoring device 10C according to the third embodiment of the disclosed technology, it is possible to aid the investigation of the cause of internal pressure change in a tire and the designing of a tire maintenance plan.

(Fourth Embodiment)

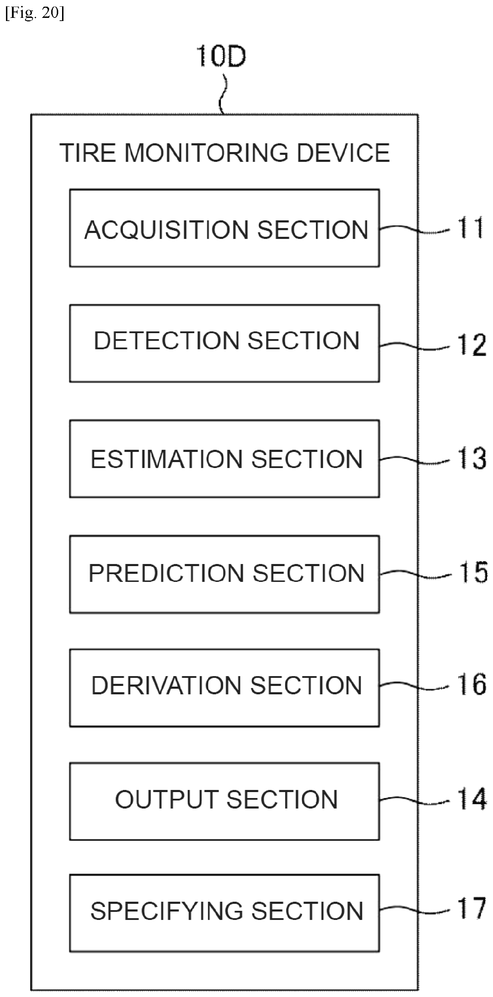

Fig. 20 is a functional block diagram illustrating an example of the functional configuration of a tire monitoring device 10D according to a fourth embodiment of the disclosed technology. The tire monitoring device 10D includes an acquisition unit 11, a detection unit 12, an estimation unit 13, a prediction unit 15, a derivation unit 16, an output unit 14, and an identification unit 17. That is, the tire monitoring device 10D has a configuration in which the identification unit 17 is further added to the tire monitoring device 10C (see Fig. 17) according to the third embodiment described above.

The identification unit 17 identifies a countermeasure for the cause estimated by the estimation unit 13. The identification unit 17 may identify the countermeasure for the cause estimated by the estimation unit 13, by referring to a database in which causes of internal pressure change are associated countermeasures, for example. The database may be stored in the nonvolatile memory 103 of the tire monitoring device 10D. The output unit 14 outputs countermeasure information indicating the countermeasure identified by the identification unit 17, together with cause information.

The process performed by the CPU reading software (a program) in each of the above embodiments may be performed by various processors other than the CPU. Examples of the processors in this case include a programmable logic device (PLD) in which the circuit configuration can be changed after manufacturing, such as a field-programmable gate array (FPGA), and a dedicated electric circuit that is a processor having a circuit configuration designed exclusively for executing specific processing, such as an application specific integrated circuit (ASIC). Also, the above processes may be performed by one of these various processors, or by a combination of two or more processors of the same type or different types (for example, a plurality of FPGAs, or a combination of a CPU and an FPGA). More specifically, the hardware structure of any of these various processors is an electric circuit in which circuit elements such as semiconductor elements are combined.

Although a mode in which the tire monitoring program is stored (installed, for example) beforehand into a storage device has been described in each of the above embodiments, it is not limited to this. The program may be provided in a form recorded in a recording medium such as a CD-ROM, a digital versatile disc read only memory (DVD-ROM), or a universal serial bus (USB) memory. Alternatively, the program may be downloaded from an external device via a network.

(Contribution to the U.N.-Initiated Sustainable Development Goals (SDGs))

The SDGs have been proposed to realize a sustainable society. An embodiment of the present invention can be considered as a technology that contributes toward "Goal 12: Responsible Consumption and Production", "Goal 13: Climate Action", and other goals.

Note that the disclosure of Japanese Patent Application No. 2023-189670, filed on November 6, 2023, is incorporated herein by reference in their entirety. Furthermore, all literatures, patent applications, and technical standards mentioned in this specification are incorporated herein by reference to the same extent as that in a case where each literature, each patent application, and each technical standard are specifically and individually mentioned to be incorporated by reference.

**Claims**

1. A tire monitoring device, comprising:

   an acquisition unit that acquires internal pressure information indicating a transition of an internal pressure of a tire;
   a prediction unit that predicts a timing at which the internal pressure of the tire will reach a threshold, on a basis of a change pattern that is a pattern of internal pressure change indicated by the internal pressure information; and
   an output unit that outputs timing information indicating the predicted timing.

2. The tire monitoring device according to claim 1, wherein:
   the prediction unit predicts the timing on a basis of a rate of change in the internal pressure indicated by the internal pressure information.

3. The tire monitoring device according to claim 1, wherein:

   the prediction unit successively predicts the timing, and
   the output unit successively updates and outputs the timing information.

4. The tire monitoring device according to claim 1, wherein:
   the output unit performs at least one of outputting the timing information to a predetermined device or uploading the timing information to a website.

5. The tire monitoring device according to claim 1, wherein:

   the acquisition unit acquires the internal pressure information for each tire among a plurality of tires provided at each vehicle among a plurality of vehicles,
   the prediction unit predicts the timing for each vehicle and each tire mounting position, and
   the output unit outputs the timing information for each vehicle and each tire mounting position.

6. The tire monitoring device according to claim 5, wherein:
   the output unit outputs, as the timing information, plotted data of a result of prediction of the timing to a corresponding position on a chart in which a first axis indicates a date on which the internal pressure of the tire will reach a threshold, and a second axis indicates a rate of change in the internal pressure of the tire.

7. The tire monitoring device according to claim 6, wherein:
   the output unit reflects an accumulated number of times of previously performed maintenance on a size of a point plotted on the chart, for each vehicle and each tire mounting position.

8. The tire monitoring device according to claim 5, further comprising:
   a derivation unit that derives a maintenance execution priority order for each tire among the plurality of tires, on a basis of the change pattern indicated by the internal pressure information and the predicted timing.

9. The tire monitoring device according to claim 1, further comprising

   an estimation unit that estimates at least one cause of the internal pressure change, on a basis of the change pattern,

wherein the output unit outputs cause information indicating the at least one cause.

10. A tire monitoring method implemented by a computer to execute processing comprising:

acquiring internal pressure information indicating a transition of an internal pressure of a tire;

predicting a timing at which the internal pressure of the tire will reach a threshold, on a basis of a change pattern that is a pattern of internal pressure change indicated by the internal pressure information; and

outputting timing information indicating the predicted timing.

11. A tire monitoring program for causing a computer to execute processing comprising:

acquiring internal pressure information indicating a transition of an internal pressure of a tire;

predicting a timing at which the internal pressure of the tire will reach a threshold, on a basis of a change pattern that is a pattern of internal pressure change indicated by the internal pressure information; and

outputting timing information indicating the predicted timing.

[Fig. 1]

[Fig. 2]

10

106 NETWORK I/F

108

104 INPUT DEVICE

102 RAM

105 DISPLAY

101 CPU

NON-VOLATILE MEMORY

TIRE MONITORING PROGRAM

103

110

[Fig. 3]

[Fig. 4]

[Fig. 5]

[Fig. 6A]

[Fig. 6B]

[Fig. 7]

```
                        ┌─────────────┐
                        │    START    │
                        └──────┬──────┘
                               │
              ┌────────────────┼───────────────────────┐
              ▼                                         │
       ┌──────────────────────────────────┐            │
  S1   │  ACQUISITION OF INTERNAL          │            │
       │  PRESSURE INFORMATION             │            │
       └──────────────┬───────────────────┘            │
                      │                                 │
              ◇───────────────────────◇                │
  S2          │  DETECTION OF ABNORMAL  │    N          │
              │  INTERNAL PRESSURE CHANGE? ──────────────┘
              ◇───────────┬───────────◇
                          │ Y
       ┌──────────────────────────────────┐
  S3   │  ESTIMATION OF CAUSE OF           │
       │  INTERNAL PRESSURE CHANGE         │
       └──────────────┬───────────────────┘
                      │
       ┌──────────────────────────────────┐
  S4   │  OUTPUT OF CAUSE                  │
       │  INFORMATION                      │
       └──────────────┬───────────────────┘
                      │
               ┌─────────────┐
               │     END     │
               └─────────────┘
```

[Fig. 8]

## VEHICLE ID: Vehicle #01 POSITION ID: Pos 2

| CAUSE | |
|---|---|
| RIM | ✔ |
| VALVE | ✔ |
| O-RING | |
| SIDE CUT | |

[Fig. 9A]

[Fig. 9B]

[Fig. 10]

[Fig. 11A]

[Fig. 11B]

[Fig. 12]

```
                    ╭─────────────╮
                    │    START    │
                    ╰─────────────╯
                           │
        ┌──────────────────────────────────────┐
  S11 ──┤  ACQUISITION OF INTERNAL              │
        │  PRESSURE INFORMATION                 │
        └──────────────────────────────────────┘
                           │
        ┌──────────────────────────────────────┐
  S12 ──┤  PREDICTION OF THRESHOLD             │
        │  ARRIVAL TIMING                       │
        └──────────────────────────────────────┘
                           │
        ┌──────────────────────────────────────┐
  S13 ──┤  OUTPUT OF TIMING INFORMATION        │
        └──────────────────────────────────────┘
                           │
                    ╭─────────────╮
                    │     END     │
                    ╰─────────────╯
```

[Fig. 13]

THRESHOLD ARRIVAL TIMING

RATE OF CHANGE IN INTERNAL PRESSURE [psi/day]

VEHICLE ID: Vehicle #04
POSITION ID: Pos 3

VEHICLE ID: Vehicle #03
POSITION ID: Pos 4

VEHICLE ID: Vehicle #01
POSITION ID: Pos 3

VEHICLE ID: Vehicle #02
POSITION ID: Pos 1

VEHICLE ID: Vehicle #05
POSITION ID: Pos 2

[Fig. 14]

[Fig. 15]

## 10B

### TIRE MONITORING DEVICE

| ACQUISITION SECTION | 11 |

| PREDICTION SECTION | 15 |

| DERIVATION SECTION | 16 |

| OUTPUT SECTION | 14 |

[Fig. 16]

THRESHOLD ARRIVAL TIMING

'23/10/10  '23/10/17  '23/10/24  '23/10/31  '23/11/7

RATE OF CHANGE IN INTERNAL PRESSURE [psi/day]
0  -1  -2  -3  -4  -5  -6  -7  -8  -9

ORDER OF PRIORITY : 3RD PLACE
VEHICLE ID: Vehicle #01
POSITION ID: Pos 3

ORDER OF PRIORITY : 5TH PLACE
VEHICLE ID: Vehicle #03
POSITION ID: Pos 4

ORDER OF PRIORITY : 4TH PLACE
VEHICLE ID: Vehicle #04
POSITION ID: Pos 3

ORDER OF PRIORITY : 2ND PLACE
VEHICLE ID: Vehicle #02
POSITION ID: Pos 1

ORDER OF PRIORITY : 1ST PLACE
VEHICLE ID: Vehicle #05
POSITION ID: Pos 2

[Fig. 17]

10C

## TIRE MONITORING DEVICE

| ACQUISITION SECTION | 11 |

| DETECTION SECTION | 12 |

| ESTIMATION SECTION | 13 |

| PREDICTION SECTION | 15 |

| DERIVATION SECTION | 16 |

| OUTPUT SECTION | 14 |

[Fig. 18]

```
              ┌─────────────┐
              │    START    │
              └──────┬──────┘
                     │
                     ▼  ◄─────────────────────────┐
      ┌──────────────────────────────────┐        │
S21 ──│  ACQUISITION OF INTERNAL          │        │
      │  PRESSURE INFORMATION             │        │
      └──────────────┬───────────────────┘        │
                     │                             │
                     ▼                             │
              ╱─────────────────╲                  │
S22 ──── ╱   DETECTION OF ABNORMAL  ╲         N     │
         ╲  INTERNAL PRESSURE CHANGE? ╱ ───────────┘
              ╲─────────────────╱
                     │ Y
                     ▼
      ┌──────────────────────────────────┐
S23 ──│  ESTIMATION OF CAUSE OF           │
      │  INTERNAL PRESSURE CHANGE         │
      └──────────────┬───────────────────┘
                     │
                     ▼
      ┌──────────────────────────────────┐
S24 ──│  PREDICTION OF THRESHOLD          │
      │  ARRIVAL TIMING                   │
      └──────────────┬───────────────────┘
                     │
                     ▼
      ┌──────────────────────────────────┐
S25 ──│  DERIVATION OF ORDER OF           │
      │  PRIORITY OF MAINTENANCE          │
      └──────────────┬───────────────────┘
                     │
                     ▼
      ┌──────────────────────────────────┐
S26 ──│  OUTPUT OF TIMING INFORMATION     │
      │  AND ORDER OF PRIORITY            │
      └──────────────┬───────────────────┘
                     │
                     ▼
              ┌─────────────┐
              │     END     │
              └─────────────┘
```

[Fig. 19]

EP 4 755 662 A1

THRESHOLD ARRIVAL TIMING

RATE OF CHANGE IN INTERNAL PRESSURE [psi/day]

'23/10/10  '23/10/17  '23/10/24  '23/10/31  '23/11/7

ORDER OF PRIORITY
: 3RD PLACE

ORDER OF PRIORITY
: 5TH PLACE

ORDER OF PRIORITY
: 4TH PLACE

VEHICLE ID: Vehicle #01
POSITION ID: Pos 3

VEHICLE ID: Vehicle #03
POSITION ID: Pos 4

VEHICLE ID: Vehicle #04
POSITION ID: Pos 3

ORDER OF PRIORITY
: 2ND PLACE

VEHICLE ID: Vehicle #02
POSITION ID: Pos 1

| CAUSE | |
|---|---|
| RIM | |
| VALVE | ✔ |
| O-RING | |
| SIDE CUT | |

ORDER OF PRIORITY
: 1ST PLACE

VEHICLE ID: Vehicle #05
POSITION ID: Pos 2

| CAUSE | |
|---|---|
| RIM | |
| VALVE | |
| O-RING | |
| SIDE CUT | ✔ |

[Fig. 20]

10D

TIRE MONITORING DEVICE

ACQUISITION SECTION —— 11

DETECTION SECTION —— 12

ESTIMATION SECTION —— 13

PREDICTION SECTION —— 15

DERIVATION SECTION —— 16

OUTPUT SECTION —— 14

SPECIFYING SECTION —— 17

## INTERNATIONAL SEARCH REPORT

| International application No. |
|---|
| **PCT/JP2024/027215** |

| A. | CLASSIFICATION OF SUBJECT MATTER |
|---|---|

***B60C 23/04***(2006.01)i
FI: B60C23/04 160A; B60C23/04 180A; B60C23/04 220Z

According to International Patent Classification (IPC) or to both national classification and IPC

| B. | FIELDS SEARCHED |
|---|---|

Minimum documentation searched (classification system followed by classification symbols)

B60C23/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2023-92701 A (PANASONIC INTELLECTUAL PROPERTY MANAGEMENT CO., LTD.) 04 July 2023 (2023-07-04) paragraphs [0057], [0066], [0073]-[0074], [0124], [0132], fig. 3 | 1-6, 8-11 |
| A | | 7 |
| X | JP 2006-327554 A (NISSAN MOTOR CO., LTD.) 07 December 2006 (2006-12-07) paragraphs [0009]-[0010], [0020], [0026]-[0028], fig. 4(b) | 1-2, 4-6, 8, 10-11 |
| A | | 7 |
| X | JP 2019-14401 A (ISUZU MOTORS LIMITED) 31 January 2019 (2019-01-31) paragraphs [0018], [0023], [0026], [0038] | 1-2, 4-6, 8, 10-11 |
| A | | 7 |
| A | WO 2022/039137 A1 (THE YOKOHAMA RUBBER CO., LTD.) 24 February 2022 (2022-02-24) fig. 7-9 | 1-11 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/027215** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/155009 A1 (BRIDGESTONE CORPORATION) 21 July 2022 (2022-07-21) fig. 1-12 | 1-11 |
| A | WO 2023/189444 A1 (BRIDGESTONE CORPORATION) 05 October 2023 (2023-10-05) paragraphs [0043]-[0044], [0056], [0086] | 8 |
| A | JP 2007-137212 A (BRIDGESTONE CORPORATION) 07 June 2007 (2007-06-07) fig. 4-7, 13-16 | 9 |

Form PCT/ISA/210 (second sheet) (July 2022)

**INTERNATIONAL SEARCH REPORT**
**Information on patent family members**

International application No.

**PCT/JP2024/027215**

| Patent document cited in search report | | | Publication date (day/month/year) | Patent family member(s) | | | Publication date (day/month/year) |
|---|---|---|---|---|---|---|---|
| JP | 2023-92701 | A | 04 July 2023 | (Family: none) | | | |
| JP | 2006-327554 | A | 07 December 2006 | (Family: none) | | | |
| JP | 2019-14401 | A | 31 January 2019 | (Family: none) | | | |
| WO | 2022/039137 | A1 | 24 February 2022 | US | 2023/0351824 | A1 | |
| | | | | CN | 116137845 | A | |
| WO | 2022/155009 | A1 | 21 July 2022 | US | 2024/0142332 | A1 | |
| | | | | CN | 116685478 | A | |
| WO | 2023/189444 | A1 | 05 October 2023 | JP | 2023-151522 | A | |
| JP | 2007-137212 | A | 07 June 2007 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014076748 A

- JP 2023189670 A